# FASCICULE DE BREVET EUROPEEN

(11) **EP 2 443 020 B1**
(45) Date de publication et mention de la délivrance du brevet: **07.08.2013**
(21) Numéro de dépôt: 10734195.0
(22) Date de dépôt: 01.06.2010
(51) Int. Cl.: B62D 25/04

(54) **PIED MILIEU POUR CAISSE DE VEHICULE AUTOMOBILE, RENFORCE A L'EGARD DES CHOCS LATERAUX ET VEHICULE EQUIPE DE TELS PIEDS MILIEU**
SEITENAUFPRALLVERSTÄRKTE MITTELSÄULE FÜR KRAFTFAHRZEUGRAHMEN UND FAHRZEUG MIT EINER DERARTIGEN MITTELSÄULE
CENTER PILLAR FOR AUTOMOBILE FRAME REINFORCED AGAINST SIDE IMPACTS, AND VEHICLE HAVING SUCH CENTER PILLAR

(30) Priorité: 16.06.2009 FR 0954040
(43) Date de publication de la demande: 25.04.2012
(73) Titulaire: Peugeot Citroën Automobiles SA, 78140 Vélizy-Villacoublay (FR)
(72) Inventeur: JAUMONT, Patrick, F-94400 Vitry Sur Seine (FR)
(74) Mandataire: Fernandez, Francis Lionel
(86) Numéro de dépôt international: PCT/FR2010/051051
(87) Numéro de publication internationale: WO 2010/146272

(56) Documents cités:
- WO-A-2007/019979
- WO-A-2008/037350
- JP-A- 58 122 240

## Description

La présente invention concerne un pied milieu pour caisse de véhicule automobile et un véhicule dont la caisse comporte deux pieds milieu selon l'invention.

On sait que la caisse d'un véhicule automobile comprend deux côtés d'habitacle comportant chacun un pied milieu.

Chacun des pieds milieu comprend un renfort de pied milieu en tôle emboutie qui est recouvert par une peau extérieure en tôle pour former un corps creux.

L'intérieur de ce corps creux est destiné à loger certains équipements tels que l'enrouleur de ceinture de sécurité et à permettre le passage de la ceinture de sécurité et des fils de connexion électrique.

Le renfort de pied milieu comporte une paroi de fond et deux parois latérales pliées à partir de cette paroi de fond.

L'une de ces deux parois latérales est destinée notamment à supporter les deux charnières de la porte latérale arrière du véhicule.

Le renfort de pied milieu comporte, en outre, dans une zone exposée aux chocs latéraux généralement située entre les emplacements de fixation des deux charnières, un renforcement en tôle pour augmenter la résistance à la déformation du pied milieu à l'égard des chocs latéraux.

Un renforcement en tôle de ce type est décrit par exemple dans les documents WO 2008/037350 et JP 58122240.

Dans d'autres réalisations connues, le renforcement en tôle est une pièce en tôle qui recouvre une surface importante du renfort de pied milieu et qui de ce fait augmente significativement la masse du pied milieu.

Dans des réalisations connues, plus couramment mises en oeuvre, le renforcement en tôle est constitué par une cloison ou entretoise qui s'étend entre les deux parois latérales du renfort de pied milieu ou par une boîte en tôle qui est soudée sur les deux parois latérales et sur la paroi de fond du renfort de pied milieu.

Dans les deux cas, le renforcement en tôle constitue un obstacle pour le passage de fils de connexion électrique ou de la ceinture de sécurité.

Le but de la présente invention est de remédier aux inconvénients des renforcements en tôle connus.

Ce but est atteint, selon l'invention, grâce à un pied milieu pour caisse de véhicule automobile comprenant un renfort de pied milieu en tôle emboutie qui comporte une paroi de fond et deux parois latérales pliées à partir de cette paroi de fond, ledit renfort de pied milieu comportant, dans une zone exposée aux chocs latéraux, un renforcement en tôle pour augmenter la résistance à la déformation du pied milieu à l'égard des chocs latéraux, caractérisé en ce que ledit renforcement est constitué par une pièce en tôle pliée en U, la base de ce U étant fixée à l'une des parois latérales du renfort de pied milieu et les deux ailes du U étant dirigées vers l'autre paroi latérale du renfort et étant fixées à la paroi de fond dudit renfort.

La forme en U ou en double équerre de la pièce en tôle est ainsi de conception simple, facile à fixer sur le renfort de pied milieu et présente une masse relativement faible.

Le fait que cette pièce en tôle soit fixée sur deux faces du renfort de pied milieu, à savoir l'une des parois latérales et la paroi de fond de ce renfort, permet de rendre l'autre paroi latérale libre par rapport à la pièce en tôle et de libérer ainsi un passage pour les fils de connexion électrique ou autres.

Selon un mode de réalisation préféré de l'invention, la base et les ailes du U de ladite pièce en tôle sont soudées respectivement, sur la face intérieure de l'une des parois latérales dudit renfort et sur la face intérieure de ladite paroi de fond du renfort.

De préférence, l'extrémité de chacune des ailes du U formé par ladite pièce en tôle est libre par rapport à la paroi latérale du renfort de pied milieu, opposée à celle à laquelle est fixée la base du U.

Ainsi, un espace libre est créé entre les extrémités des ailes de la pièce en U et la paroi latérale du renfort pour le passage de fils électriques ou autres.

De préférence également, la largeur de la base du U et la largeur de chacune des ailes du U formé par ladite pièce en tôle sont sensiblement égales à la largeur desdites parois latérales du renfort de pied milieu, ce qui permet à la pièce en U de conférer au pied milieu une résistance optimale à l'égard des chocs latéraux.

Dans un mode de réalisation avantageux de l'invention, chacune desdites ailes du U de ladite pièce en tôle comporte un rebord plié perpendiculairement à ladite aile, ce rebord plié étant soudé à la paroi de fond du renfort de pied milieu.

Ces rebords soudés à la paroi de fond du renfort augmentent encore davantage la résistance mécanique du renfort dans la zone exposée aux chocs latéraux.

De préférence, la base du U de ladite pièce en tôle est soudée à la paroi latérale du renfort de pied milieu destinée à supporter les deux charnières de la porte latérale arrière du véhicule.

Selon une particularité avantageuse de l'invention, la base du U de ladite pièce en tôle constitue un renfort pour la fixation d'un arrêt de porte sur la face extérieure de ladite paroi latérale du renfort de pied milieu.

Ainsi, cet arrêt de porte est capable de supporter des efforts d'arrachement très élevés.

Selon une autre particularité, la paroi de fond du renfort de pied milieu comporte un évidement situé dans une zone comprise entre les deux ailes du U formé par ladite pièce en tôle.

Ainsi, des fils électriques peuvent passer dans cet évidement et contourner la pièce en U en passant dans l'espace libre compris entre les ailes de cette pièce et la paroi latérale adjacente du renfort de pied milieu.

Selon un autre aspect, l'invention concerne également un véhicule automobile équipé de deux pieds milieu selon l'invention.

D'autres particularités et avantages de l'invention apparaîtront encore tout au long de la description ci-après.

Aux dessins annexés, donnés à titre d'exemples, non limitatifs :
- la figure 1 est une vue en perspective partielle d'un renfort de pied milieu selon l'invention comportant un renforcement sous la forme d'une pièce pliée en U,
- la figure 2 est une autre vue en perspective partielle du renfort de pied milieu,
- la figure 3 est une vue en coupe suivant le plan III-III de la figure 2.

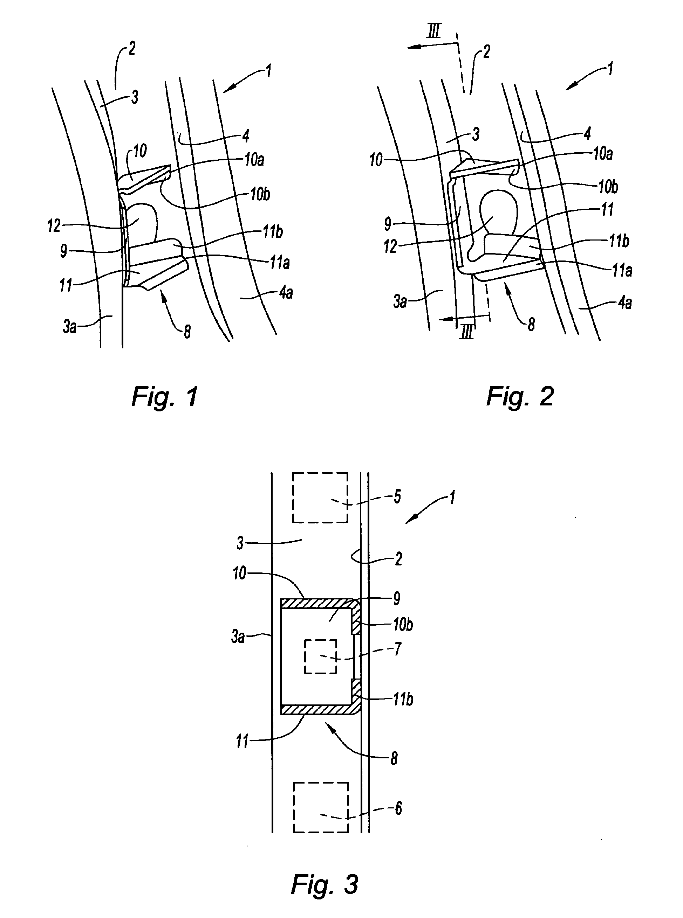

La figure 1 représente une partie d'un renfort de pied milieu 1 selon l'invention.

Ce renfort 1 est en tôle emboutie et comporte une paroi de fond 2 et deux parois latérales 3, 4 comportant chacune un rebord 3a, 4a plié vers l'extérieur.

Une peau extérieure (non représentée) est destinée à être soudée sur les rebords 3a, 4a pour former avec le renfort 1 un corps creux.

Lorsque le pied milieu est monté sur le côté d'habitacle du véhicule, la paroi de fond 2 est adjacente à l'intérieur de l'habitacle.

La paroi latérale 3 du renfort 1 est destinée à supporter les deux charnières de la porte latérale arrière du véhicule ainsi qu'un arrêt de porte.

Les emplacements de fixation des charnières sont représentés en pointillés sur la figure 3 et désignés par les références 5 et 6.

L'emplacement de la fixation de l'arrêt de porte est désigné par la référence 7.

La partie du renfort 1 de pied milieu située entre les deux charnières ci-dessus est particulièrement exposée aux chocs latéraux.

Il convient donc de renforcer cette partie pour limiter l'intrusion de celle-ci à l'intérieur de l'habitacle du véhicule afin de protéger les occupants.

A cet effet, conformément à l'invention, la partie ci-dessus du renfort 1 comporte une pièce en tôle 8 pliée en forme de U.

La base 9 du U de la pièce 8 est fixée à l'une 3 des parois latérales du renfort 1 de pied milieu et les deux ailes 10, 11 du U sont dirigées vers l'autre paroi latérale 4 du renfort 1 et sont fixées à la paroi de fond 2 de ce renfort 1.

Dans cet exemple, la base 9 et les ailes 10, 11 du U de la pièce en tôle 8 sont soudées respectivement sur la face intérieure de l'une 3 des parois latérales du renfort 1 et sur la face intérieure de la paroi de fond 2 de ce renfort 1.

Par ailleurs, l'extrémité 10a, 11 a de chacune des ailes 10, 11 du U formé par la pièce en tôle 8 est libre par rapport à la paroi latérale 4 du renfort 1 de pied milieu, opposée à la paroi 3 à laquelle est fixée la base 9 du U.

Un espace libre est ainsi créé entre les ailes 10, 11 et la paroi latérale 4 pour le passage de fils électriques.

La figure 3 montre que la largeur de la base 9 du U et la largeur de chacune des ailes 10, 11 du U formé par la pièce en tôle 8 sont sensiblement égales à la largeur de la paroi latérale 3 du renfort de pied milieu.

La pièce 8 est ainsi complètement intégrée dans le creux du renfort 1.

En outre, chacune des ailes 10, 11 du U de la pièce en tôle 8 comporte un rebord 10b, 11b plié perpendiculairement à l'aile 10, 11.

Ce rebord plié 10b, 11b est soudé à la paroi de fond 2 du renfort 1 de pied milieu.

La figure 3 montre que la base 9 du U de la pièce en tôle 8 est soudée à la paroi latérale 3 du renfort 1 de pied milieu destinée à supporter les deux charnières de la porte latérale arrière du véhicule, dont les emplacements sont désignés par les références 5 et 6.

Par ailleurs, la base 9 du U de la pièce en tôle 8 constitue un renfort pour la fixation d'un arrêt de porte (voir référence 7 sur la figure 3) sur la face extérieure de la paroi latérale 3 du renfort 1 de pied milieu.

Les figures 1 et 2 montrent également que la paroi de fond 2 du renfort 1 de pied milieu comporte un évidement 12 situé dans une zone comprise entre les deux ailes 10, 11 de la pièce en tôle 8 autorisant ainsi le passage de fils électriques qui peuvent également contourner la pièce en U entre les extrémités 10a, 11a des ailes 10, 11 et la paroi latérale 4.

Le renforcement apporté par la pièce en tôle pliée en U en forme de double équerre présente les principaux avantages suivants.

Elle est facile à fabriquer et à fixer dans le creux du renfort 1 de pied milieu.

Sa masse est peu élevée et par conséquent n'augmente pas significativement la masse totale du renfort de pied milieu.

La pièce en U 8 est fixée dans une zone du renfort de pied milieu particulièrement sensible aux déformations causées par un choc latéral. La pièce en U 8 permet donc d'améliorer le comportement du pied milieu en cas de choc latéral.

Cette pièce en U est soudée au renfort de pied milieu sur deux faces perpendiculaires de ce renfort, ce qui augmente notablement sa résistance aux chocs latéraux.

L'espace libre créé entre les ailes 10, 11 de la pièce en U 8, ainsi que l'évidement 12 facilitent le passage de fils électriques.

La base 9 de la pièce 8 renforce la fixation de l'arrêt de porte.

## Revendications

1. Pied milieu pour caisse de véhicule automobile comprenant un renfort (1) de pied milieu en tôle emboutie qui comporte une paroi de fond (2) et deux parois latérales (3, 4) pliées à partir de cette paroi de fond (2), ledit renfort (1) de pied milieu comportant, dans une zone exposée aux chocs latéraux, un renforcement en tôle pour augmenter la résistance à la déformation du pied milieu à l'égard des chocs latéraux, **caractérisé en ce que** ledit renforcement est constitué par une pièce en tôle (8) pliée en U, la base (9) de ce U étant fixée à l'une (3) des parois latérales du renfort (1) de pied milieu et les deux ailes du U (10, 11) étant dirigées vers l'autre paroi latérale (4) du renfort (1) et étant fixées à la paroi de fond (2) dudit renfort.

2. Pied milieu selon la revendication 1, **caractérisé en ce que** la base (9) et les ailes (10, 11) du U de ladite pièce en tôle (8) sont soudées respectivement, sur la face intérieure de l'une (3) des parois latérales dudit renfort (1) et sur la face intérieure de ladite paroi de fond (2) du renfort.

3. Pied milieu selon l'une des revendications 1 ou 2, **caractérisé en ce que** l'extrémité (10a 11a) de chacune des ailes (10, 11) du U formé par ladite pièce en tôle (8) est libre par rapport à la paroi latérale (4) du renfort (1) de pied milieu, opposée à celle à laquelle est fixée la base (9) du U.

4. Pied milieu selon l'une des revendications 1 à 3, **caractérisé en ce que** la largeur de la base (9) du U et la largeur de chacune des ailes (10, 11) du U formé par ladite pièce en tôle (8) sont sensiblement égales à la largeur desdites parois latérales (3, 4) du renfort (1) de pied milieu.

5. Pied milieu selon l'une des revendications 1 à 4, **caractérisé en ce que** chacune desdites ailes (10, 11) du U de ladite pièce en tôle (8) comporte un rebord (10b, 11 b) plié perpendiculairement à ladite aile (10, 11), ce rebord plié (10b, 11b) étant soudé à la paroi de fond (2) du renfort (1) de pied milieu.

6. Pied milieu selon l'une des revendications 1 à 5, **caractérisé en ce que** la base (9) du U de ladite pièce en tôle (8) est soudée à la paroi latérale (3) du renfort (1) de pied milieu destinée à supporter les deux charnières de la porte latérale arrière du véhicule.

7. Pied milieu selon la revendication 6, **caractérisé en ce que** la base (9) du U de ladite pièce en tôle (8) constitue un renfort pour la fixation d'un arrêt de porte sur la face extérieure de ladite paroi latérale (3) du renfort de pied milieu.

8. Pied milieu selon l'une des revendications 1 à 7, **caractérisé en ce que** la paroi de fond (2) du renfort (1) de pied milieu comporte un évidement (12) situé dans une zone comprise entre les deux ailes (10, 11) du U formé par ladite pièce en tôle (8).

9. Véhicule automobile dont la caisse comporte deux pieds milieu selon l'une des revendications 1 à 8.

## Patentansprüche

1. Mittelsäule für Fahrzeugkarosserie, die eine Mittelsäulenverstärkung (1) aus Stanzblech aufweist, die eine Rückwand (2) und zwei Seitenwände (3, 4) aufweist, die ausgehend von dieser Rückwand (2) gefaltet sind, wobei die Mittelsäulenverstärkung (1) in einem Bereich, der seitlichen Stößen ausgesetzt ist, eine Blechverstärkung aufweist, um die Verformungsfestigkeit der Mittelsäule gegenüber seitlichen Stößen zu erhöhen, **dadurch gekennzeichnet, dass** die Verstärkung aus einem U-förmig gefalteten Blechteil (8) besteht, wobei die Basis (9) dieses U an einer (3) der Seitenwände der Mittelsäulenverstärkung (1) befestigt ist und die zwei Schenkel des U (10, 11) zu der anderen Seitenwand (4) der Mittelsäulenverstärkung (1) gerichtet und an der Rückwand (2) der Verstärkung befestigt sind.

2. Mittelsäule nach Anspruch 1, **dadurch gekennzeichnet, dass** die Basis (9) und die Schenkel (10, 11) des U des Blechteils (8) jeweils auf die Innenseite einer (3) der Seitenwände der Verstärkung (1) und auf die Innenseite der Rückwand (2) der Verstärkung geschweißt sind.

3. Mittelsäule nach einem der Ansprüche 1 oder 2, **dadurch gekennzeichnet, dass** das Ende (10a, 11a) jedes der Schenkel (10, 11) des U, das von dem Blechteil (8) gebildet wird, in Bezug zu der Seitenwand (4) der Mittelsäulenverstärkung (1), die der gegenüber liegt, die an der Basis (9) des U befestigt ist, frei ist.

4. Mittelsäule nach einem der Ansprüche 1 bis 3, **dadurch gekennzeichnet, dass** die Breite der Basis (9) des U und die Breite jedes der Schenkel (10, 11) des U, das von dem Blechteil (8) geformt wird, im Wesentlichen gleich der Breite der Seitenwände (3, 4) der Mittelsäulenverstärkung (1) sind.

5. Mittelsäule nach einem der Ansprüche 1 bis 4, **dadurch gekennzeichnet, dass** jeder der Schenkel (10, 11) des U des Blechteils (8) einen Rand (10b, 11b), der senkrecht zu dem Schenkel (10, 11) gefaltet ist, aufweist, wobei dieser gefaltete Rand (10b, 11b) an die Rückwand (2) der Mittelsäulenverstärkung (1) geschweißt ist.

6. Mittelsäule nach einem der Ansprüche 1 bis 5, **dadurch gekennzeichnet, dass** die Basis (9) des U des Blechteils (8) an die Seitenwand (3) der Mittelsäulenverstärkung (1) geschweißt ist, die dazu bestimmt ist, die zwei Scharniere der seitlichen hinteren Tür des Fahrzeugs zu tragen.

7. Mittelsäule nach Anspruch 6, **dadurch gekennzeichnet, dass** die Basis (9) des U des Blechteils (8) eine Verstärkung für die Befestigung eines Türanschlags auf der Außenseite der Seitenwand (3) der Mittelsäulenverstärkung bildet.

8. Mittelsäule nach einem der Ansprüche 1 bis 7, **dadurch gekennzeichnet, dass** die Rückwand (2) der Verstärkung (1) der Mittelsäule eine Aussparung (12) aufweist, die sich in einem Bereich befindet, der zwischen den zwei Schenkeln (10, 11) des von dem Blechteil (8) gebildeten U liegt.

9. Kraftfahrzeug, dessen Karosserie zwei Mittelsäulen nach einem der Ansprüche 1 des 8 aufweist.

## Claims

1. A centre pillar for an automobile frame including a centre pillar reinforcement (1) made of stamped sheet metal which comprises a bottom wall (2) and two side walls (3, 4) bent from this bottom wall (2), the said centre pillar reinforcement (1) comprising, in an area exposed to side impacts, a sheet metal reinforcement to increase the resistance of the centre pillar to deformation with regard to side impacts, **characterised in that** the said reinforcement is constituted by a sheet metal part (8) bent in a U-shape, the base (9) of this U being attached to one (3) of the side walls of the centre pillar reinforcement (1), and the two wings (10, 11) of the U being directed towards the other side wall (4) of the reinforcement (1) and being attached to the bottom wall (2) of the said reinforcement.

2. The centre pillar according to Claim 1, **characterised in that** the base (9) and the wings (10, 11) of the U of the said sheet metal part (8) are welded respectively, on the interior face of one (3) of the side walls of the said reinforcement (1) and on the interior face of the said bottom wall (2) of the reinforcement.

3. The centre pillar according to one of Claims 1 or 2, **characterized in that** the end (10a, 11a) of each of the wings (10, 11) of the U formed by the said sheet metal part (8) is free with respect to the side wall (4) of the centre pillar reinforcement (1) opposite to that to which the base (9) of the U is attached.

4. The centre pillar according to one of Claims 1 to 3, **characterized in that** the width of the base (9) of the U and the width of each of the wings (10, 11) of the U formed by the said sheet metal part (8) are substantially equal to the width of the said side walls (3, 4) of the centre pillar reinforcement (1).

5. The centre pillar according to one of Claims 1 to 4, **characterized in that** each of the said wings (10, 11) of the U of the said sheet metal part (8) comprises a rim (10b, 11b) folded perpendicularly to the said wing (10, 11), this folded rim (10b, 11b) being welded to the bottom wall (2) of the centre pillar reinforcement (1).

6. The centre pillar according to one of Claims 1 to 5, **characterized in that** the base (9) of the U of the said sheet metal part (8) is welded to the side wall (3) of the centre pillar reinforcement (1) intended to support the two hinges of the rear side door of the vehicle.

7. The centre pillar according to Claim 6, **characterized in that** the base (9) of the U of the said sheet metal part (8) constitutes a reinforcement for the attachment of a door stop on the exterior face of the said side wall (3) of the centre pillar reinforcement.

8. The centre pillar according to one of Claims 1 to 7, **characterized in that** the bottom wall (2) of the centre pillar reinforcement (1) comprises a recess (12) situated in an area comprised between the two wings (10, 11) of the U formed by the said sheet metal part (8).

9. An automobile, the frame of which comprises two centre pillars according to one of Claims 1 to 8.
